# EUROPEAN PATENT APPLICATION

(11) **EP 4 438 655 A1**
(43) Date of publication of application: **02.10.2024**
(21) Application number: 22898397.9
(22) Date of filing: 09.11.2022
(51) Int. Cl.: C08G 73/06, C07F 7/18

(54) **CYCLIC ORGANOSILOXANE CONTAINING IMIDE BOND AND POLYMERIZABLE UNSATURATED BOND, AND CURABLE RESIN COMPOSITION COMPRISING SAID CYCLIC ORGANOSILOXANE**

(30) Priority: 25.11.2021 JP 2021190701
(71) Applicant: SHIN-ETSU CHEMICAL CO., LTD., Tokyo 1000005 (JP)
(72) Inventor: TSUCHIDA Kazuhiro, Annaka-shi, Gunma 379-0224 (JP); FUJITA Shoji, Annaka-shi, Gunma 379-0224 (JP)
(74) Representative: Mewburn Ellis LLP
(86) International application number: PCT/JP2022/041669
(87) International publication number: WO 2023/095613

(57) **Abstract**

The purpose of the present invention is to provide: a cyclic organosiloxane which contains an imide bond and a polymerizable unsaturated bond, and which provides a cured product having excellent hardness and bending resistance; and a curable resin composition comprising the cyclic organosiloxane. The present invention provides: a cyclic organosiloxane which contains an imide bond and a polymerizable unsaturated bond and which is represented by general formula (1); and a curable resin composition comprising the cyclic organosiloxane. 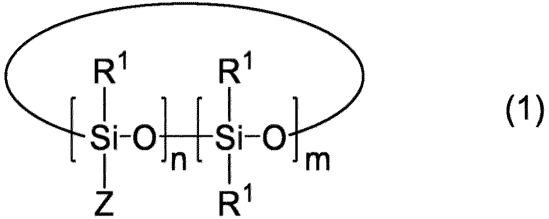 (In the formula, each R¹ independently represents a monovalent hydrocarbon group or a hydrogen atom for which there may be at least one interposed atom selected from oxygen, nitrogen, sulfur, and phosphorus; each Z is independently a monovalent organic group which has an imide bond and a polymerizable unsaturated bond and for which there may be at least one interposed atom selected from oxygen, nitrogen, sulfur, and phosphorus; n is an integer of 2-6; m is an integer of 0-4; and the sum of n+m is 4-6. The arrangement of a siloxane unit in parentheses may be arbitrary.)

## Description

### TECHNICAL FIELD

This invention relates to a cyclic organosiloxane containing an imide bond and a polymerizable unsaturated bond and a curable resin composition comprising the same.

### BACKGROUND ART

The materials for use in electronic part encapsulants, prepregs, metal clad laminates, printed circuit boards, and semiconductor packages are required to have satisfactory mechanical properties including hardness, crack resistance, and flex resistance.

Patent Documents 1 and 2 describe curable resin compositions comprising a linear dimethylpolysiloxane having maleimide bonds at both ends and a cyanate ester compound. While these patent documents intend to obtain cured products meeting a coefficient of thermal expansion, hardness and flexural strength all together by introducing a dimethylpolysiloxane structure to the compositions, there remains room for improvement in their performance.

### PRIOR ART DOCUMENTS

### PATENT DOCUMENTS

Patent Document 1: WO 2019/039135
Patent Document 2: WO 2019/230944

### SUMMARY OF INVENTION

### TECHNICAL PROBLEM

An object of the invention, which has been made under the above-mentioned circumstances, is to provide a cyclic organosiloxane containing an imide bond and a polymerizable unsaturated bond and a curable resin composition comprising the same, the composition affording a cured product having improved hardness and flex resistance.

### SOLUTION TO PROBLEM

Making extensive investigations to attain the above object, the inventors have found that a curable resin composition comprising a cyclic organosiloxane containing an imide bond and a polymerizable unsaturated bond meets hardness, crack resistance, and flex resistance all together. The invention is predicated on this finding.

Accordingly, the invention provides a cyclic organosiloxane containing an imide bond and a polymerizable unsaturated bond and a curable resin composition comprising the same, as defined below.
1. A cyclic organosiloxane containing an imide bond and a polymerizable unsaturated bond, represented by the general formula (1): 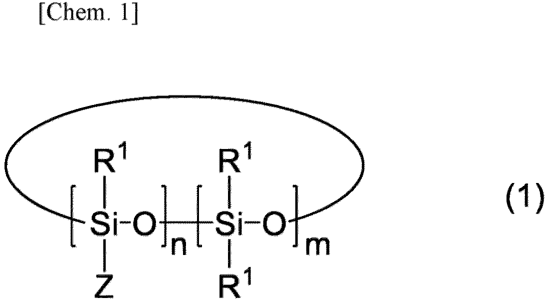 wherein R¹ is each independently hydrogen or a monovalent hydrocarbon group in which at least one atom selected from oxygen, nitrogen, sulfur and phosphorus may intervene, Z is each independently a monovalent organic group having an imide bond and a polymerizable unsaturated bond in which at least one atom selected from oxygen, nitrogen, sulfur and phosphorus may intervene, n is an integer of 2 to 6, m is an integer of 0 to 4, the sum of n+m is from 4 to 6, and the arrangement of siloxane units in parentheses may be arbitrary.
2. The cyclic organosiloxane containing an imide bond and a polymerizable unsaturated bond of above 1 wherein Z is a group having the formula (2): 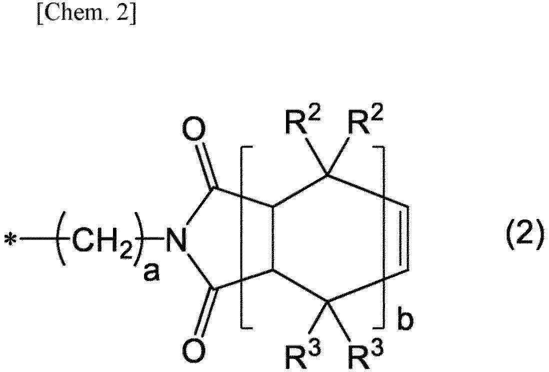 wherein * designates a point of attachment to the silicon atom, R² and R³ are each independently hydrogen or a monovalent hydrocarbon group in which at least one atom selected from oxygen, nitrogen, sulfur and phosphorus may intervene, R² and R³ may bond together to form a ring structure, a is an integer of 3 to 8, and b is an integer of 0 to 2.
3. The cyclic organosiloxane containing an imide bond and a polymerizable unsaturated bond of above 1 or 2 wherein Z is a group having the formula (3) or (4): 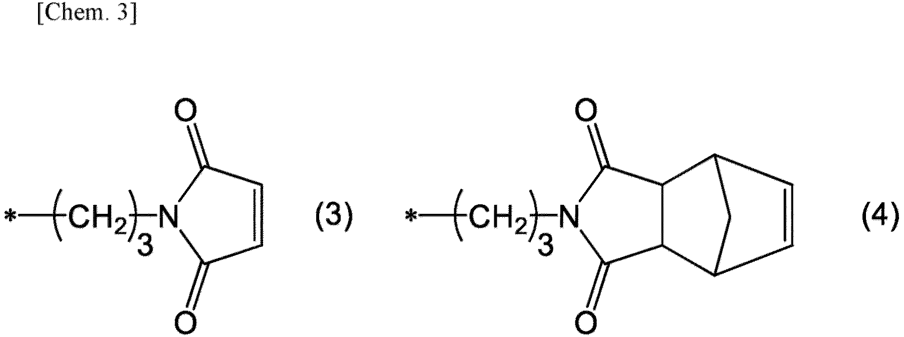 wherein * designates a point of attachment to the silicon atom.
4. The cyclic organosiloxane containing an imide bond and a polymerizable unsaturated bond of any one of above 1 to 3 wherein R¹ is an alkyl group of 1 to 3 carbon atoms, n is 2, and m is 2.
5. A curable resin composition comprising
   (A) a cyclic organosiloxane containing an imide bond and a polymerizable unsaturated bond as set forth in any one of above 1 to 4, and
   (B) a cyanate ester compound.
6. The curable resin composition of 5, further comprising (C) a maleimide compound other than component (A).
7. The curable resin composition of above 5 or 6, further comprising (D) a curing catalyst.

### ADVANTAGEOUS EFFECTS OF INVENTION

By incorporating a cyclic organosiloxane containing an imide bond and a polymerizable unsaturated bond into a curable matrix, a cured product meeting hardness, crack resistance, and flex resistance all together is obtained.

### DESCRIPTION OF EMBODIMENTS

Now the invention is described in detail.

The invention provides a cyclic organosiloxane containing an imide bond, represented by the formula (1).

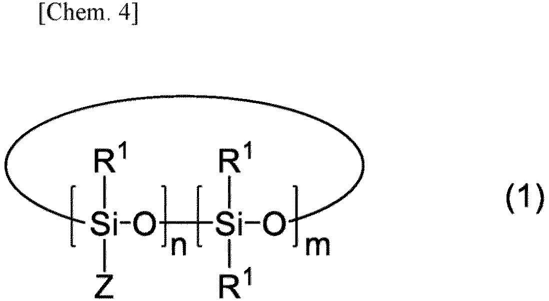

Herein R¹ is each independently hydrogen or a monovalent hydrocarbon group in which at least one atom selected from oxygen, nitrogen, sulfur and phosphorus may intervene, Z is each independently a monovalent organic group having an imide bond and a polymerizable unsaturated bond in which at least one atom selected from oxygen, nitrogen, sulfur and phosphorus may intervene, n is an integer of 2 to 6, m is an integer of 0 to 4, and the sum of n+m is from 4 to 6. The arrangement of siloxane units in parentheses may be arbitrary.

The monovalent hydrocarbon group R¹ may be straight, branched or cyclic and is preferably of 1 to 20 carbon atoms. Examples thereof include alkyl groups such as methyl, ethyl, propyl, butyl, pentyl, hexyl, cyclohexyl, heptyl, octyl, and decyl; alkenyl groups such as vinyl, allyl and butenyl; aryl groups such as phenyl, tolyl, xylyl and naphthyl; and aralkyl groups such as benzyl, phenylethyl and phenylpropyl. Of these, methyl, ethyl and propyl are preferred from the aspect of commercial availability of raw materials used.

Preferred examples of the monovalent organic group having an imide bond and a polymerizable unsaturated bond, represented by Z, include groups having the formula (2). 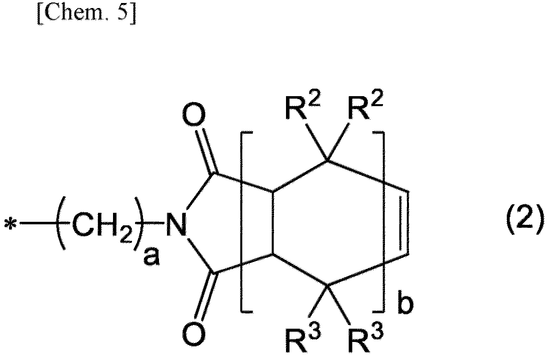 Herein, the asterisk (*) designates a point of attachment to the silicon atom, R² and R³ are each independently hydrogen or a monovalent hydrocarbon group in which at least one atom selected from oxygen, nitrogen, sulfur and phosphorus may intervene, R² and R³ may bond together to form a ring structure, "a" is an integer of 3 to 8, and "b" is an integer of 0 to 2.

More illustrative examples of the monovalent organic group having an imide bond and a polymerizable unsaturated bond include groups having the formulae (3) and (4), but are not limited thereto.

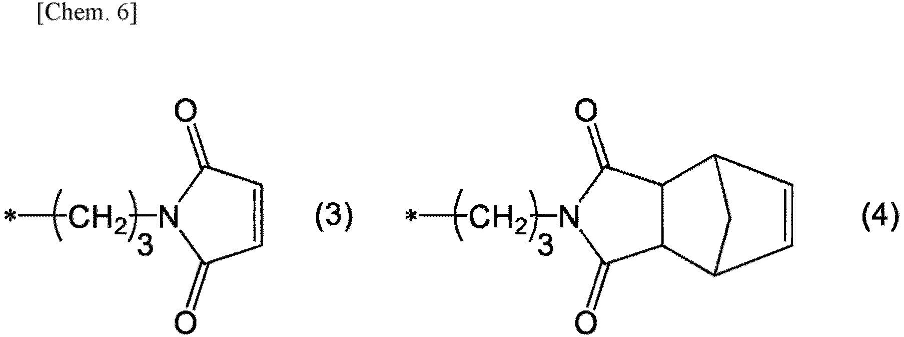

Herein, * designates a point of attachment to the silicon atom.

In formula (1), n is preferably an integer of 2 to 4, more preferably 2. In formula (1), m is preferably an integer of 0 to 2, more preferably 2. The values of n and m are selected on the basis of commercial availability of a primary amino group-containing cyclic organosiloxane as starting material. Additionally, if n exceeds 6, the compound of formula (1) takes a structure containing excessive polymerizable functional groups per molecule, a curable resin composition comprising the compound may have too high a crosslinking density, and a cured product thereof may be reduced in crack resistance and flex resistance.

The cyclic organosiloxane containing an imide bond and a polymerizable unsaturated bond is obtained, for example, from imidization reaction of a primary amino group-containing cyclic organosiloxane having the formula (5) with a compound having a cyclic carboxylic anhydride group and a polymerizable carbon-carbon double bond in a common molecule.

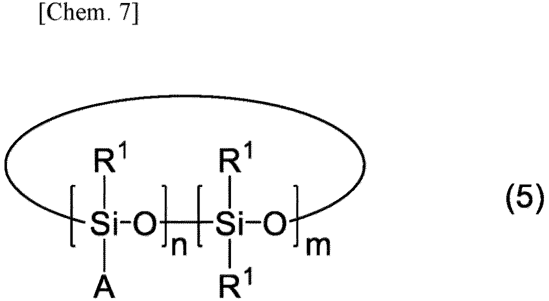

In formula (5), R¹, n and m are as defined above, and the arrangement of siloxane units in parentheses may be arbitrary. "A" is a primary amino-containing monovalent organic group in which at least one atom selected from oxygen, nitrogen, sulfur and phosphorus may intervene. Examples of "A" include 3-aminopropyl, 6-aminohexyl and 8-aminooctyl.

The primary amino group-containing cyclic organosiloxane is obtained, for example, from hydrosilation reaction of a Si-H group on a cyclic organohydrogensiloxane with an amine having a polymerizable carbon-carbon double bond.

Examples of the cyclic organohydrogensiloxane include those having the formula (5').

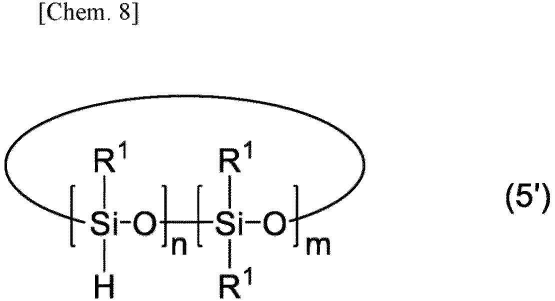

In formula (5'), R¹, n and m are as defined above, and the arrangement of siloxane units in parentheses may be arbitrary.

Illustrative examples of the cyclic organohydrogensiloxane include
1,3,5,7-tetramethyl-1,3-dipropylcyclotetrasiloxane,
1,3,5,7-tetramethyl-1,5-dipropylcyclotetrasiloxane, and
1,3,5,7-tetramethylcyclotetrasiloxane.

Examples of the amine having a polymerizable carbon-carbon double bond include allylamine, 5-hexenylamine, and 7-octenylamine, wherein at least one atom selected from oxygen, nitrogen, sulfur and phosphorus may intervene in their hydrocarbon moiety.

The hydrosilation is typically carried out in the presence of a catalyst. Examples of the catalyst include well-known platinum group metal-based catalysts, for example, platinum, palladium and rhodium-based catalysts, with platinum-based catalysts being preferred. Suitable platinum-based catalysts include platinum black; solid platinum on carriers such as alumina and silica; chloroplatinic acid, alcohol-modified chloroplatinic acids, and complexes of chloroplatinic acid with olefins; and complexes of platinum with vinylsiloxanes.

The hydrosilation reaction is typically carried out at a temperature from room temperature to 200°C, preferably from 30 to 120°C. The reaction time may be determined depending on the scale of production and reaction temperature. A solvent may not be used in the reaction. If necessary, a solvent may be used as long as it does not adversely affect the reaction.

The other reactant is a compound having a cyclic carboxylic anhydride group and a polymerizable carbon-carbon double bond in a common molecule. Although the compound is not particularly limited, maleic anhydride, 1,2,3,6-tetrahydrophthalic anhydride, and 5-norbornene-2,3-dicarboxylic anhydride are preferred from the aspect of commercial availability.

With respect to the ratio of reactants, it is preferred from the aspect of productivity that the compound having a cyclic carboxylic anhydride group and a polymerizable carbon-carbon double bond in a common molecule is used in such an amount as to provide 0.8 to 1.5 moles of acid anhydride group per mole of primary amino group in the primary amino group-containing cyclic organosiloxane.

The time of imidization reaction is such that the reactants may be fully consumed with the progress of reaction. From the aspect of production efficiency, the reaction time is preferably 10 minutes to 24 hours, more preferably 1 to 10 hours, even more preferably 2 to 7 hours. The reaction temperature is preferably set low as long as the desired reaction takes place and productivity is not reduced.

In the course of imidization reaction, an organic solvent, catalyst and dehydrating agent may be used if necessary.

The organic solvent is not particularly limited as long as it does not react with the reactants and fully dissolves them. Examples include aprotic polar solvents such as dimethyl sulfone, dimethyl sulfoxide, N,N-dimethylformamide, N,N-dimethylacetamide, 1,3-dimethyl-2-imidazolidinone, and N-methylpyrrolidone; sulfones such as tetramethylene sulfone; ether solvents such as tetrahydrofuran, 4-methyltetrahydropyran, diethylene glycol dimethyl ether, diethylene glycol diethyl ether, propylene glycol monomethyl ether monoacetate, and cyclopentyl methyl ether; ketone solvents such as methyl ethyl ketone, methyl isobutyl ketone, cyclopentanone, and cyclohexanone; and aromatic solvents such as toluene and xylene. Inter alia, the ether solvents and aprotic polar solvents are preferred for reactivity and solubility. The organic solvent may be used alone or in admixture of two or more.

Examples of the catalyst include, but are not limited to, organic metal salts such as tin octylate, zinc octylate, dibutyltin dimaleate, zinc naphthenate, cobalt naphthenate, and tin oleate; metal chlorides such as zinc chloride, aluminum chloride and tin chloride; and tertiary amine compounds. Of these, cobalt naphthenate is preferred for reactivity in the case of thermal imidization not using a dehydrating agent. Cobalt naphthenate is preferably combined with a tertiary amine in the case of chemical imidization using a dehydrating agent. The catalyst may be used alone or in admixture of two or more.

The chemical imidization using a dehydrating agent has the advantage that the temperature of imidization reaction is low as compared with thermal imidization. Suitable dehydrating agents are carboxylic anhydrides, for example, acetic anhydride, propionic anhydride, and succinic anhydride, but not limited thereto. On use of the carboxylic anhydride, it is preferred to use a tertiary amine in an equimolar amount to the carboxylic anhydride. Although the tertiary amine used herein is not particularly limited, triethylamine is preferred from the aspects of commercial availability and ease of removal in the subsequent step.

From the aspect of productivity, the amount of the dehydrating agent used in chemical imidization is preferably 1 to 2 moles, more preferably 1.2 to 1.6 moles per mole of primary amino group in the primary amino group-containing cyclic organosiloxane.

The weight average molecular weight of the cyclic organosiloxane containing an imide bond and a polymerizable unsaturated bond, though not particularly limited, is preferably 500 to 5,000, more preferably 600 to 3,000 when it is taken into account to impart a sufficient hardness and flex resistance to a cured product obtained by curing a curable resin composition comprising the cyclic organosiloxane. It is noted that the weight average molecular weight is determined by gel permeation chromatography (GPC) versus polystyrene standards using tetrahydrofuran (THF) as developing solvent.

The functionality equivalent of polymerizable unsaturated bond-containing group on the cyclic organosiloxane containing an imide bond and a polymerizable unsaturated bond, though not particularly limited, is preferably 200 to 500 g/mol when it is taken into account to impart a sufficient hardness and flex resistance to a cured product obtained by curing a curable resin composition comprising the cyclic organosiloxane.

Another embodiment of the invention is a curable resin composition comprising components (A) and (B):
(A) a cyclic organosiloxane containing an imide bond and a polymerizable unsaturated bond and
(B) a cyanate ester compound.

The cyclic organosiloxane containing an imide bond and a polymerizable unsaturated bond (A) in the curable resin composition is the same as the aforementioned cyclic organosiloxane containing an imide bond and a polymerizable unsaturated bond. The amount of the cyclic organosiloxane containing an imide bond and a polymerizable unsaturated bond contained as component (A) may be set appropriate depending on the desired properties and is not particularly limited. From the aspect of further improving the balance of flexural resistance, heat resistance and dielectric properties, the amount is preferably 1 to 25 parts by weight, more preferably 2 to 20 parts by weight, even more preferably 5 to 15 parts by weight per 100 parts by weight of resin solids in the resin composition.

The cyanate ester compound (B) in the curable resin composition is not particularly limited as long as it has at least one cyanato group (or cyanic acid ester group). Aromatic cyanate ester compounds are preferred. A curable resin composition containing a cyanate ester compound cures into a product having improved properties such as heat resistance and low thermal expansion.

Examples of the cyanate ester compound include cyanatobenzene, 1-cyanato-2-, 1-cyanato-3- or 1-cyanato-4-methylbenzene, 1-cyanato-2-, 1-cyanato-3- or 1-cyanato-4-methoxybenzene, 1-cyanato-2,3-, 1-cyanato-2,4-, 1-cyanato-2,5-, 1-cyanato-2,6-, 1-cyanato-3,4- or 1-cyanato-3,5-dimethylbenzene, cyanatoethylbenzene, cyanatobutylbenzene, cyanatooctylbenzene, cyanatononylbenzene, 2-(4-cyanatophenyl)-2-phenylpropane (or 4-α-cumylphenol cyanate), 1-cyanato-4-cyclohexylbenzene, 1-cyanato-4-vinylbenzene, 1-cyanato-2- or 1-cyanato-3-chlorobenzene, 1-cyanato-2,6-dichlorobenzene, 1-cyanato-2-methyl-3-chlorobenzene, cyanatonitrobenzene, 1-cyanato-4-nitro-2-ethylbenzene, 1-cyanato-2-methoxy-4-allylbenzene (or eugenol cyanate), methyl(4-cyanatophenyl) sulfide, 1-cyanato-3-trifluoromethylbenzene, 4-cyanatobiphenyl, 1-cyanato-2- or 1-cyanato-4-acetylbenzene, 4-cyanatobenzaldehyde, methyl 4-cyanatobenzoate, phenyl 4-cyanatobenzoate, 1-cyanato-4-acetaminobenzene, 4-cyanatobenzophenone, 1-cyanato-2,6-di-tert-butylbenzene, 1,2-dicyanatobenzene, 1,3-dicyanatobenzene, 1,4-dicyanatobenzene, 1,4-dicyanato-2-tert-butylbenzene, 1,4-dicyanato-2,4-dimethylbenzene, 1,4-dicyanato-2,3,4-trimethylbenzene, 1,3-dicyanato-2,4,6-trimethylbenzene, 1,3-dicyanato-5-methylbenzene, 1-cyanato or 2-cyanatonaphthalene, 1-cyanato-4-methoxynaphthalene, 2-cyanato-6-methylnaphthalene, 2-cyanato-7-methoxynaphthalene, 2,2'-dicyanato-1,1'-binaphthyl, 1,3-, 1,4-, 1,5-, 1,6-, 1,7-, 2,3-, 2,6- or 2,7-dicyanatonaphthalene, 2,2'- or 4,4'-dicyanatobiphenyl, 4,4'-dicyanatooctafluorobiphenyl, 2,4'- or 4,4'-dicyanatodiphenylmethane, bis(4-cyanato-3,5-dimethylphenyl)methane, 1,1-bis(4-cyanatophenyl)ethane, 1,1-bis(4-cyanatophenyl)propane, 2,2-bis(4-cyanatophenyl)propane, 2,2-bis(4-cyanato-3-methylphenyl)propane, 2,2-bis(2-cyanato-5-biphenylyl)propane, 2,2-bis(4-cyanatophenyl)hexafluoropropane, 2,2-bis(4-cyanato-3,5-dimethylphenyl)propane, 1,1-bis(4-cyanatophenyl)butane, 1,1-bis(4-cyanatophenyl)isobutane, 1,1-bis(4-cyanatophenyl)pentane, 1,1-bis(4-cyanatophenyl)-3-methylbutane, 1,1-bis(4-cyanatophenyl)-2-methylbutane, 1,1-bis(4-cyanatophenyl)-2,2-dimethylpropane, 2,2-bis(4-cyanatophenyl)butane, 2,2-bis(4-cyanatophenyl)pentane, 2,2-bis(4-cyanatophenyl)hexane, 2,2-bis(4-cyanatophenyl)-3-methylbutane, 2,2-bis(4-cyanatophenyl)-4-methylpentane, 2,2-bis(4-cyanatophenyl)-3,3-dimethylbutane, 3,3-bis(4-cyanatophenyl)hexane, 3,3-bis(4-cyanatophenyl)heptane, 3,3-bis(4-cyanatophenyl)octane, 3,3-bis(4-cyanatophenyl)-2-methylpentane, 3,3-bis(4-cyanatophenyl)-2-methylhexane, 3,3-bis(4-cyanatophenyl)-2,2-dimethylpentane, 4,4-bis(4-cyanatophenyl)-3-methylheptane, 3,3-bis(4-cyanatophenyl)-2-methylheptane, 3,3-bis(4-cyanatophenyl)-2,2-dimethylhexane, 3,3-bis(4-cyanatophenyl)-2,4-dimethylhexane, 3,3-bis(4-cyanatophenyl)-2,2,4-trimethylpentane, 2,2-bis(4-cyanatophenyl)-1,1,1,3,3,3-hexafluoropropane, bis(4-cyanatophenyl)phenylmethane, 1,1-bis(4-cyanatophenyl)-1-phenylethane, bis(4-cyanatophenyl)biphenylmethane, 1,1-bis(4-cyanatophenyl)cyclopentane, 1,1-bis(4-cyanatophenyl)cyclohexane, 2,2-bis(4-cyanato-3-isopropylphenyl)propane, 1,1-bis(3-cyclohexyl-4-cyanatophenyl)cyclohexane, bis(4-cyanatophenyl)diphenylmethane, bis(4-cyanatophenyl)-2,2-dichloroethylene, 1,3-bis[2-(4-cyanatophenyl)-2-propyl]benzene, 1,4-bis[2-(4-cyanatophenyl)-2-propyl]benzene, 1,1-bis(4-cyanatophenyl)-3,3,5-trimethylcyclohexane, 4-[bis(4-cyanatophenyl)methyl]biphenyl, 4,4-dicyanatobenzophenone, 1,3-bis(4-cyanatophenyl)-2-propen-1-one, bis(4-cyanatophenyl) ether, bis(4-cyanatophenyl) sulfide, bis(4-cyanatophenyl) sulfone, 4-cyanatobenzoic acid 4-cyanatophenyl ester (or 4-cyanatophenyl 4-cyanatobenzoate), bis(4-cyanatophenyl) carbonate, 1,3-bis(4-cyanatophenyl)adamantane, 1,3-bis(4-cyanatophenyl)-5,7-dimethyladamantane, 3,3-bis(4-cyanatophenyl) isobenzofuran-1(3H)-one (or cyanate of phenolphthalein), 3,3-bis(4-cyanato-3-methylphenyl) isobenzofuran-1(3H)-one (or cyanate of o-cresolphthalein), 9,9'-bis(4-cyanatophenyl)fluorene, 9,9-bis(4-cyanato-3-methylphenyl)fluorene, 9,9-bis(2-cyanato-5-biphenylyl)fluorene, tris(4-cyanatophenyl)methane, 1,1,1-tris(4-cyanatophenyl)ethane, 1,1,3-tris(4-cyanatophenyl)propane, α,α,α'-tris(4-cyanatophenyl)-1-ethyl-4-isopropylbenzene, 1,1,2,2-tetrakis(4-cyanatophenyl)ethane, tetrakis(4-cyanatophenyl)methane, 2,4,6-tris(N-methyl-4-cyanatoanilino)-1,3,5-triazine, 2,4-bis(N-methyl-4-cyanatoanilino)-6-(N-methylanilino)-1,3,5-triazine, bis(N-4-cyanato-2-methylphenyl)-4,4'-oxydiphthalimide, bis(N-3-cyanato-4-methylphenyl)-4,4'-oxydiphthalimide, bis(N-4-cyanatophenyl)-4,4'-oxy diphthalimide, bis(N-4-cyanato-2-methylphenyl)-4,4'-(hexafluroisopropylidene) diphthalimide, tris(3,5-dimethyl-4-cyanatobenzyl) isocyanurate, 2-phenyl-3,3-bis(4-cyanatophenyl)phthalimidine, 2-(4-methylphenyl)-3,3-bis(4-cyanatophenyl)phthalimidine, 2-phenyl-3,3-bis(4-cyanato-3-methylphenyl)phthalimidine, 1-methyl-3,3-bis(4-cyanatophenyl)indolin-2-one, and 2-phenyl-3,3-bis(4-cyanatophenyl)indolin-2-one.

The amount of the cyanate ester compound contained as component (B) may be set appropriate depending on the desired properties and is not particularly limited. From the aspect of further improving the balance of flexural strength, dielectric properties, heat resistance, coefficient of thermal expansion, and thermal conductivity, the amount is preferably 1 to 99 parts by weight, more preferably 10 to 80 parts by weight, even more preferably 25 to 70 parts by weight per 100 parts by weight of solids in the resin composition.

If necessary, the curable resin composition may further comprise (C) a maleimide compound other than component (A) and (D) a curing catalyst.

The maleimide compound as component (C) encompasses compounds having at least two maleimide bonds in the molecule, which are commonly marketed as bismaleimide resin. For example, co-condensates of bismaleimides with aldehyde compounds are included and may be used alone or in admixture. Examples of the bismaleimide include 4,4'-diphenylmethane bismaleimide, N,N'-ethylene bismaleimide, N,N'-hexamethylene bismaleimide, N,N'-m-phenylene bismaleimide, N,N'-p-phenylene bismaleimide, 2,2-bis[4-(4-maleimidophenoxy)phenyl]propane, bis[4-(4-maleimidophenoxy)phenyl]methane, 1,1,1,3,3,3-hexafluoro-2,2-bis[4-(4-maleimidophenoxy)phenyl]propane, N,N'-p,p'-diphenyldimethylsilyl bismaleimide, N,N'-4,4'-diphenyl ether bismaleimide, N,N'-methylene bis(3-chloro-p-phenylene) bismaleimide, N,N'-4,4'-diphenylsulfone bismaleimide, N,N'-4,4'-dicyclohexylmethane bismaleimide, N,N'-dimethylenecyclohexane bismaleimide, N,N'-m-xylene bismaleimide, N,N'-4,4'-diphenylcyclohexane bismaleimide, and N-phenylmaleimide.

Examples of the aldehyde compound include formaldehyde, acetaldehyde, benzaldehyde, and hydroxyphenylaldehyde.

Examples of the curing catalyst as component (D) include imidazole compounds such as 2-methylimidazole, 2-ethyl-4-methylimidazole, 2-phenyl-4-methylimidazole, 2-phenylimidazole, and 1-benzyl-2-methylimidazole; tertiary amine compounds such as triethylamine, benzyldimethylamine, α-methylbenzyldimethylamine, and 1,8-diazabicyclo[5.4.0]undecene-7; organo-phosphorus compounds such as triphenylphosphine, tributylphosphine, tri(p-methylphenyl)phosphine, tri(nonylphenyl)phosphine, triphenylphosphine triphenylborate, tetraphenylphosphine tetraphenylborate, tributylhexadecylphosphonium bromide, and tris(dimethoxyphenyl)phosphine; phosphonium salts obtained from reaction of organo-phosphorus compounds such as triphenylphosphine, tributylphosphine, tri(p-methylphenyl)phosphine, tri(nonylphenyl)phosphine, and tris(dimethoxyphenyl)phosphine with hydrogen halides or alkyl halides; organometallic compounds such as aluminum and zirconium compounds, as well as heterocyclic amine compounds, boron chelate compounds, organic ammonium salts, organic sulfonium salts, and organic peroxides, which may be used alone or in admixture. Inter alia, tetraphenylphosphonium tetra-p-tolylborate is preferred because of more accelerated cure.

Although the amount of the curing catalyst (D) is not particularly limited as long as the desired cure speed, cured physical properties, and an ample pot life of the composition are met, the amount is in most cases preferably 0.1 to 5 parts by weight per 100 parts by weight of resin solids in the resin composition.

The curable resin composition may contain an organic solvent if necessary. In this case, the composition may be used in such form that at least part of resin components, preferably all of resin components are dissolved in or compatibilized with the organic solvent to form a solution or varnish. The organic solvent may be used alone or in admixture.

Any of well-known organic solvents may be used as long as at least part of resin components, preferably all of resin components can be dissolved in or compatibilized with the organic solvent. Examples of the organic solvent include ketones such as acetone, methyl ethyl ketone and methyl isobutyl ketone; cellosolve solvents such as propylene glycol monomethyl ether and propylene glycol monomethyl ether acetate; ester solvents such as methyl lactate, methyl acetate, ethyl acetate, butyl acetate, isoamyl acetate, ethyl lactate, methyl methoxypropionate, and methyl hydroxyisobutyrate; polar solvents, typically amides such as N-methylpyrrolidinone, dimethylacetamide and dimethylformamide; and nonpolar solvents, typically aromatic hydrocarbons such as toluene and xylene. Inter alia, N-methylpyrrolidinone is preferred from the aspect of dissolving power and methyl ethyl ketone is preferred from a balance with drying.

### [Preparation of curable resin composition]

The curable resin composition may be prepared according to the standard method. The preparation method is not particularly limited as long as a curable resin composition containing (A) the cyclic organosiloxane uniformly containing an imide bond and a polymerizable unsaturated bond, (B) the cyanate ester compound, and the aforementioned other components is obtained. For example, a curable resin composition in one embodiment may be readily prepared by blending component (A), component (B) and other components in an organic solvent in sequence and thoroughly agitating them.

The temperature at which the curable resin composition is heat cured is not particularly limited as long as a cured product having the desired properties is obtained. From the aspects of volatility of the organic solvent and production efficiency, the temperature is preferably 100 to 250°C, more preferably 150 to 200°C. The curing time may be set as appropriate.

The method of forming a cured product of the curable resin composition is not particularly limited and any of well-known methods may be used. A method using a mold and a casting or film depositing method of coating and curing the composition onto a film having a release layer are exemplary although the method is not limited thereto.

The material of which the mold is made is not particularly limited as long as the material ensures that a cured product obtained after curing is released from the mold. Any of metals, glass, plastics, and silicones, for example, may be used although it is preferable to use a mold coated with Teflon^{®}. The mold coated with Teflon^{®} has such release properties that when a cured product of the curable resin composition is taken out of the mold, the use of this mold prevents the cured product from being broken.

The cured product of the curable resin composition can be advantageously used as encapsulants for electronic parts or constituents of prepregs, metal clad laminates, printed circuit boards, and semiconductor packages. For example, a prepreg is obtainable by impregnating or coating a substrate with the curable resin composition and drying. Suitable drying conditions include a temperature of 20 to 150°C and 1 to 90 minutes.

Also, a buildup film or dry film solder resist is obtainable by using a releasable plastic film as the substrate, coating the curable resin composition onto the plastic film, and drying the coating.

Further, the curable resin composition may be used in the uncured state that just the organic solvent is dried. Alternatively, the curable resin composition is used in the semi-cured state or B-stage, if necessary.

### EXAMPLES

Synthesis Examples, Examples and Comparative Examples are given below for further illustrating the invention although the invention is not limited thereto. In Examples, "parts" and "%" are by weight unless otherwise stated. The viscosity is measured at 25°C by a rotational viscometer. The kinematic viscosity is measured at 25°C by a Cannon-Fenske viscometer. GPC and proton nuclear magnetic resonance (¹H-NMR) spectroscopy analyses are carried out under the following conditions.

### (1) GPC analysis conditions

| | |
|---|---|
| Instrument: | HLC-8320GPC by Tosoh Corp. |
| Developing solvent: | tetrahydrofuran (THF) |
| Flow rate: | 0.6 mL/min |
| Detector: | differential refractive index detector (RI) |
| Column: | TSK Guardcolumn SuperH-H |
| | TSKgel Super HM-N (6.0mm I.D. × 15cm × 1) |
| | TSKgel SuperH2500 (6.0mm I.D. × 15cm × 1) (all by Tosoh Corp.) |
| Column temperature: | 40°C |
| Sample injection volume: | 50 µL (THF solution with concentration 2.0 wt%) |
| Standard: | monodisperse polystyrene |

### (2) ¹H-NMR spectroscopy analysis conditions

| | |
|---|---|
| Instrument: | Avance III400 by Bruker |
| Solvent: | CDCl₃ |
| Internal standard: | tetramethylsilane (TMS) |

### [1] Synthesis of primary amino group-containing cyclic organosiloxane

### [Synthesis Example 1]

A 2-L three-neck flask equipped with a stirrer, condenser, dropping funnel and thermometer was charged with 240 g (4.2 mol) of allylamine and heated at 80°C in an oil bath. The flask was further charged with a toluene solution of a platinum complex (complex of Pt(0) with 1,3-divinyltetramethyldisiloxane) in such an amount as to give 0.0001 mole of platinum complex per mole of Si-H group in a cyclic organohydrogensiloxane to be added dropwise, followed by stirring and mixing. To the flask, 650 g (2.01 mol) of a mixture of 1,3,5,7-tetramethyl-1,3-dipropylcyclotetrasiloxane and 1,3,5,7-tetramethyl-1,5-dipropylcyclotetrasiloxane was added dropwise as the cyclic organohydrogensiloxane. Since the reaction solution raised its temperature along the dropwise addition, temperature management was carried out by air cooling or water cooling such that the reaction ran at an internal temperature of 80-90°C. At the end of dropwise addition, the solution was heated and stirred at 80°C for 4 hours. By gas chromatography analysis, the disappearance of the reactants and the formation of the desired amino group-containing cyclic organosiloxane were confirmed. The solution was then cooled to room temperature. The unreacted residue of allylamine and toluene of the platinum catalyst were distilled off under reduced pressure, obtaining a yellow transparent liquid A1. Liquid A1 had a kinematic viscosity of 33 mm²/s at 25°C and the functionality amount of primary amino group was 253 g/mol.

On ¹H-NMR and GPC analyses, liquid A1 was identified to be a mixture of a compound having the formula (6) and a compound having the formula (7).

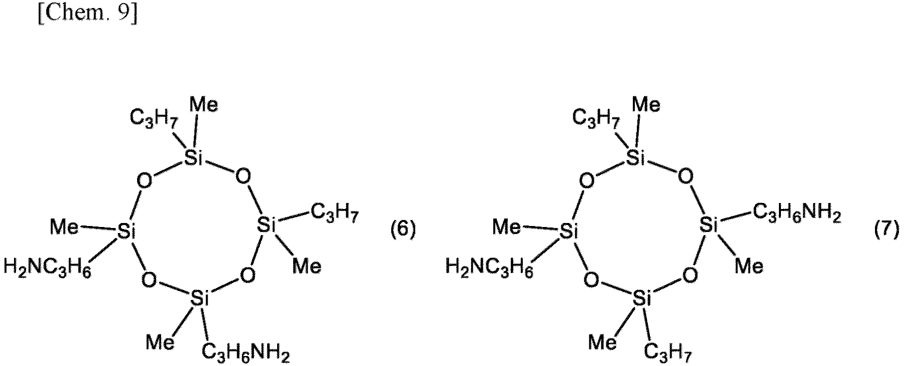

### [Synthesis Example 2]

The same procedure as in Synthesis Example 1 was carried out except that 1.0 mol of 1,3,5,7-tetramethylcyclotetrasiloxane was used instead of the mixture of 1,3,5,7-tetramethyl-1,3-dipropylcyclotetrasiloxane and 1,3,5,7-tetramethyl-1,5-dipropylcyclotetrasiloxane. There was obtained a brown transparent liquid A2. Liquid A2 had a kinematic viscosity of 41 mm²/s at 25°C and the functionality amount of primary amino group was 125 g/mol.

On ¹H-NMR and GPC analyses, liquid A2 was identified to be a compound having the formula (8).

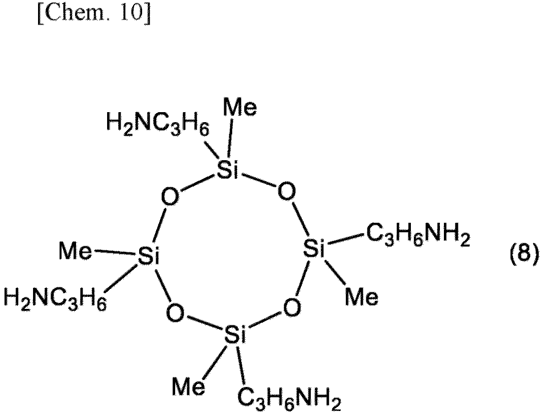

### [2] Synthesis of cyclic organosiloxane compound containing an imide bond and a polymerizable unsaturated bond

### [Example 1]

A 1-L separable flask equipped with a stirrer, reflux condenser, dropping funnel and thermometer was charged with 98.1 parts by weight (1 mol) of maleic anhydride, 300 parts by weight of tetrahydrofuran, and 0.4 part by weight of bis-t-butylphenol as polymerization inhibitor, which were stirred and mixed. Once the components were uniformly dissolved, 253 parts by weight (1 mol as amino group) of the amino group-containing cyclic organosiloxane A1 was added dropwise. Since exothermic reaction took place along the dropwise addition, temperature management was carried out in a water bath such that the temperature of the reaction solution might not exceed 50°C. At the end of dropwise addition, stirring was continued at room temperature for 1 hour. By GPC analysis, the disappearance of the reactants was confirmed. Subsequently, 150 parts by weight (1.5 mol) of acetic anhydride was admitted into the flask and stirred, after which 150 parts by weight (1.5 mol) of triethylamine was added dropwise. Along dropwise addition, the solution was slightly exothermic and changed its outer appearance from orange to dark red. At the end of dropwise addition, reaction was continued at an internal temperature of 50°C for 3 hours. By GPC analysis, the disappearance of the peak attributable to an intermediately formed amic acid structure component and the appearance of the peak attributable to a newly formed imide bond-containing cyclic organosiloxane were confirmed. Finally, the unreacted residue of acid anhydride, amine and tetrahydrofuran were distilled off under reduced pressure, obtaining a black oily compound M1. The compound had a viscosity of 10,320 mPa·s at 25°C.

On ¹H-NMR and GPC analyses, compound M1 was identified to be a mixture of a compound having the formula (9) and a compound having the formula (10).

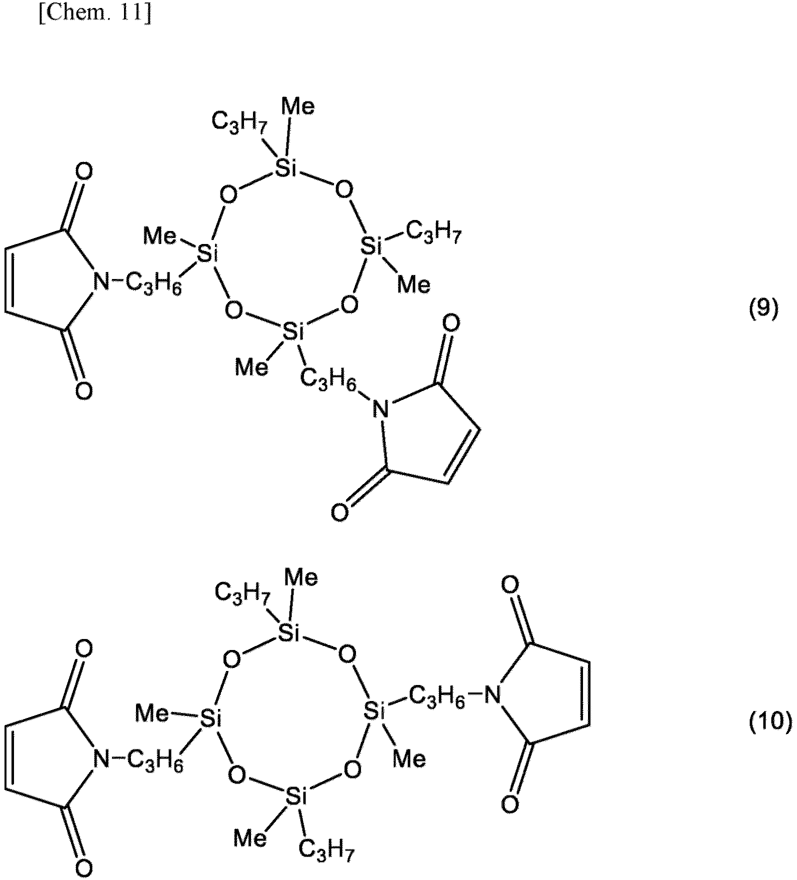

### [Example 2]

By carrying out the same procedure as in Example 1 except that A1 was changed to A2 (1 mol as amino group), a black oily compound M2 was obtained. The compound had a viscosity of 105,000 mPa s at 25°C. On ¹H-NMR and GPC analyses, compound M2 was identified to be a compound having the formula (11).

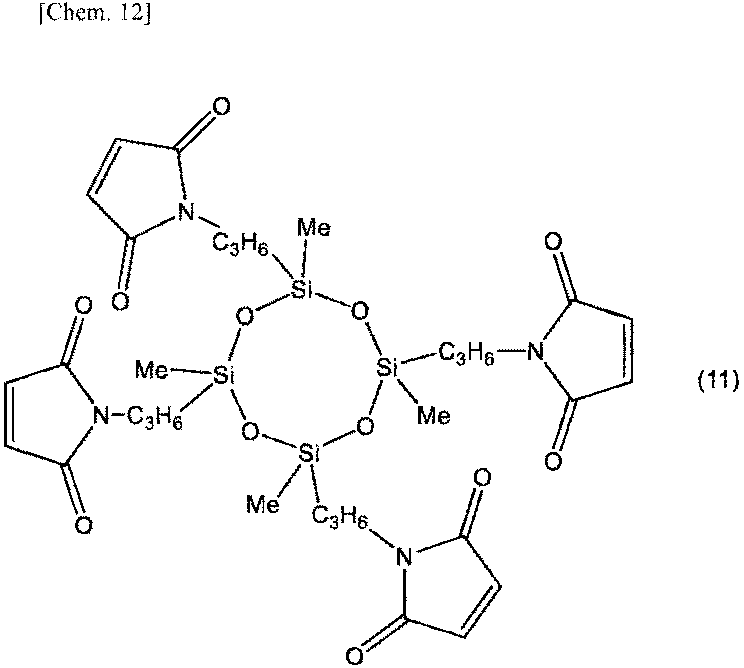

### [Example 3]

By following the same procedure as in Example 1 except that maleic anhydride was changed to 5-norbornene-2,3-dicarboxylic anhydride (1 mol), a black oily compound M3 was obtained. The compound had a viscosity of 52,000 mPa s at 25°C. On ¹H-NMR and GPC analyses, compound M3 was identified to be a mixture of a compound having the formula (12) and a compound having the formula (13).

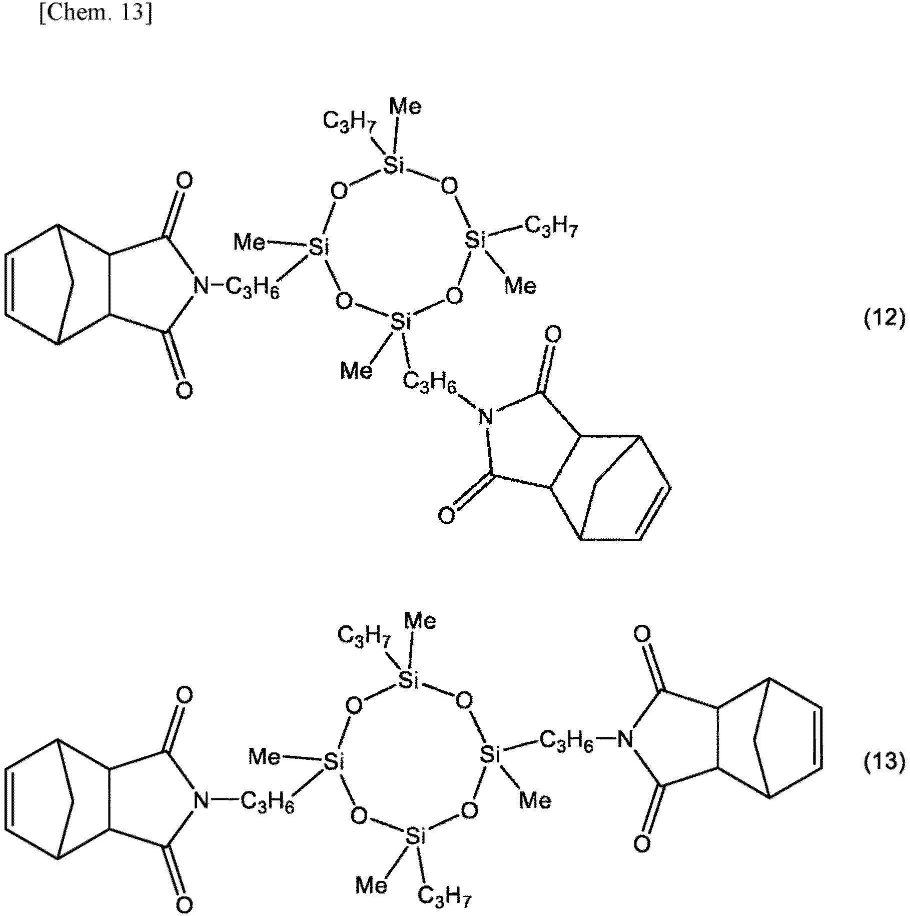

### [Comparative Synthesis Example 1]

By following the same procedure as in Example 1 except that A1 was changed to both end aminopropyldimethylsilyl structured polydimethylsiloxane with a primary amino group amount of 270 g/mol (1 mol as amino group), a black oily compound MR-1 was obtained. MR-1 had a viscosity of 6,320 mPa s at 25°C. On ¹H-NMR and GPC analyses, MR-1 was identified to be a mixture of compounds having the formula (14).

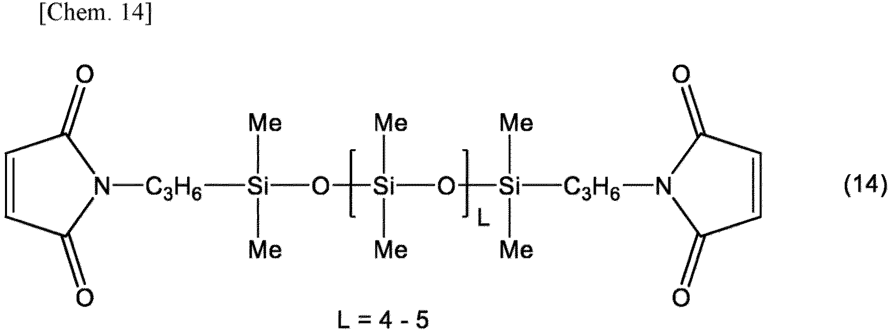

### [Comparative Synthesis Example 2]

By following the same procedure as in Example 1 except that A1 was changed to both end aminopropyldimethylsilyl structured polydimethylsiloxane with a primary amino group amount of 430 g/mol (1 mol as amino group), a black oily compound MR-2 was obtained. MR-2 had a viscosity of 2,100 mPa s at 25°C. On ¹H-NMR and GPC analyses, MR-2 was identified to be a mixture of compounds having the formula (15).

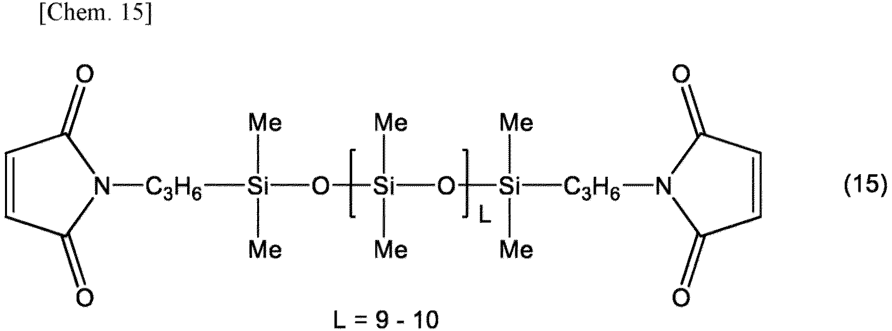

### [Comparative Synthesis Example 3]

By following the same procedure as in Example 1 except that A1 was changed to both end aminopropyldimethylsilyl structured polydimethylsiloxane with a primary amino group amount of 780 g/mol (1 mol as amino group), a black oily compound MR-3 was obtained. MR-3 had a viscosity of 1,000 mPa s at 25°C. On ¹H-NMR and GPC analyses, MR-3 was identified to be a mixture of compounds having the formula (16).

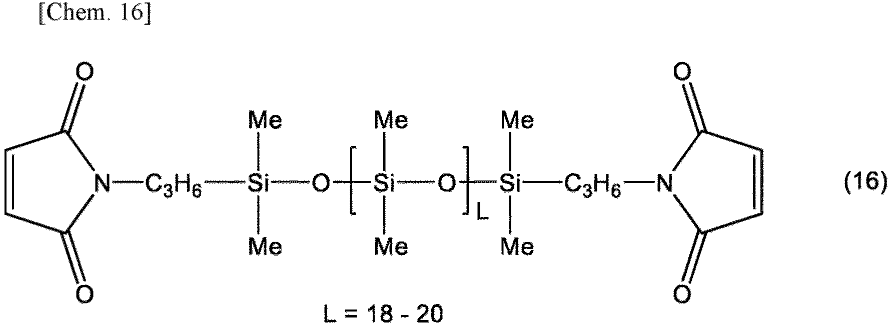

### [Comparative Synthesis Example 4]

By following the same procedure as in Example 1 except that A1 was changed to both end aminopropyldimethylsilyl structured polydimethylsiloxane with a primary amino group amount of 2,130 g/mol (1 mol as amino group), a black oily compound MR-4 was obtained. MR-4 had a viscosity of 150 mPa s at 25°C. On ¹H-NMR and GPC analyses, MR-4 was identified to be a mixture of compounds having the formula (17).

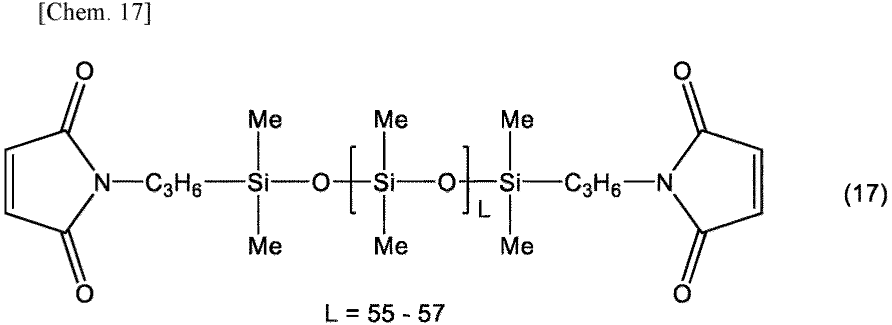

### [3] Preparation of curable resin composition

### [Examples 4 to 5 and Comparative Examples 1 to 7]

A thermosetting resin composition was prepared by mixing components in such a mixing ratio (weight ratio) as shown in Table 1 that the molar ratio of imide bond to cyanate group was 1 : 3 and the molar ratio of imide bond to curing catalyst was 1 : 0.03, and diluting the mixture with N-methylpyrrolidone (NMP) such that the total of the components was 35% by weight of the overall composition.

**[Table 1]**

| | | Example | | | | | Comparative Example | | | | | | |
|---|---|---|---|---|---|---|---|---|---|---|---|---|---|
| | | 4 | 5 | 6 | 7 | 8 | 1 | 2 | 3 | 4 | 5 | 6 | 7 |
| Mixing weight ratio | M1 | 10.5 | | | 0.5 | 1.1 | | | | | | | |
| | M2 | | 6.9 | | | | | | | | | | |
| | M3 | | | 12.9 | | | | | | | | | |
| | MR-0 | | | | | | | 7.2 | | | | | |
| | MR-1 | | | | | | | | 12 | | | | 1.2 |
| | MR-2 | | | | | | | | | 17.9 | | | |
| | MR-3 | | | | | | | | | | 30 | | |
| | MR-4 | | | | | | | | | | | 77 | |
| | BMI-70 | | | | 7.4 | 7.0 | 7.8 | | | | | | 7.0 |
| | LECY | 14.2 | 14.2 | 14.2 | 14.2 | 14.2 | 14.2 | 14.2 | 14.2 | 14.2 | 14.2 | 14.2 | 14.2 |
| | Curing catalyst | 0.4 | 0.4 | 0.4 | 0.4 | 0.4 | 0.4 | 0.4 | 0.4 | 0.4 | 0.4 | 0.4 | 0.4 |

The abbreviations in Table 1 are identified below.

| | |
|---|---|
| MR-0: | disiloxane having two maleimide bonds, represented by the formula shown below, synthesized according to Synthesis Example 2 in WO 2019/039135 |
| BMI-70: | aromatic compound having two maleimide bonds, represented by the formula shown below, trade name "BMI-70" by K-I Chemical Industry Co., Ltd. |
| LECY: | 2,2-bis(4-cyanatophenyl)ethane, having the formula shown below, trade name Primaset^{®} LECy by Lonza Japan Co., Ltd. |
| Curing catalyst: | tetraphenylphosphonium tetraphenylborate, TPP-K by Hokko Chemical Industry Co., Ltd. |

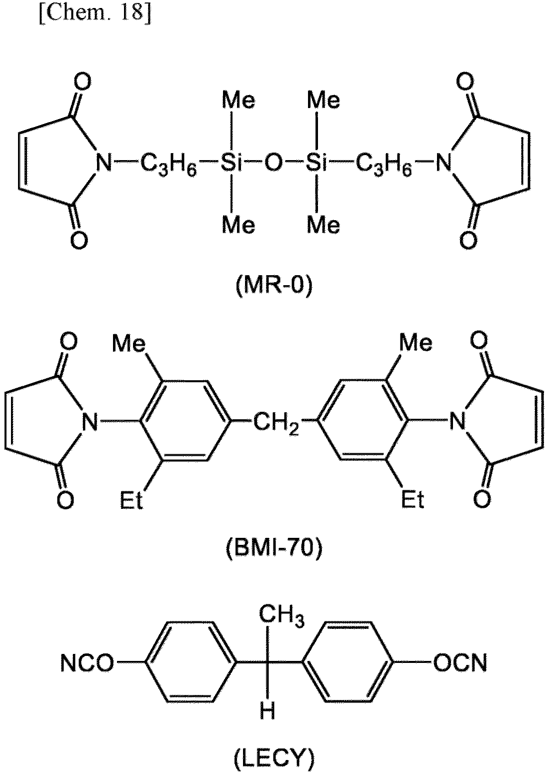

The thermosetting resin composition in Table 1 was cast into a Teflon^{®}-coated mold (0.3 mm deep by 15 cm long by 10 cm wide), after which the mold was rested on a hot plate at 200°C. The organic solvent, N-methylpyrrolidinone (NMP) was allowed to volatilize off at 200°C over 90 minutes. Thereafter, the mold was heated in a dryer at 150°C for 60 minutes and further heated in a dryer at 200°C for 60 minutes to complete cure, yielding a molded sheet.

The molded sheets obtained in Examples 4 to 8 and Comparative Examples 1 to 7 were evaluated as follows. The results are shown in Table 2.

### (1) Outer appearance

On visual observation, the molded sheet (test piece) was judged for any anomalies.
O: no anomalies
×: anomalies such as tack, flecks and cracks

### (2) Moldability

The molded part was observed whether or not it was a self-standing sheet upon removal from the mold, and judged as follows.
O: molded part could be removed as a sheet without anomalies
×: molded part was so brittle or soft that it could not be removed as a sheet

### (3) Flex resistance

The test piece was cut at a width of 1 cm into a rectangular strip of 10 cm long by 1 cm wide by 0.3 mm thick. The strip was clamped at the short sides with tweezers and flexed 90°. On flexing, the strip was observed and judged as follows.
O: could be flexed without breakage
△: partially cracked, but no breakage
×: could not be flexed with complete breakage

### (4) Storage elastic modulus, Tanδ (max)

The test piece was cut at a width of 1 cm into a rectangular strip of 10 cm long by 1 cm wide by 0.3 mm thick. Using a viscoelasticity analyzer DMA7100 (Hitachi High-Tech Science Ltd.), the strip was measured in the tensile mode by heating it in air atmosphere from -50°C to 300°C at a heating rate of 10°C/min.

### (5) Durometer hardness

Hardness was measured according to JIS K7215 using Durometer type D indenter (Teclock Co., Ltd.).

**[Table 2]**

| | Example | | | | | Comparative Example | | | | | | |
|---|---|---|---|---|---|---|---|---|---|---|---|---|
| | 4 | 5 | 6 | 7 | 8 | 1 | 2 | 3 | 4 | 5 | 6 | 7 |
| (1) Outer appearance | ○ | ○ | ○ | ○ | ○ | ○ | ○ | ○ | × | × | × | × |
| (2) Moldability | ○ | ○ | ○ | ○ | ○ | ○ | ○ | ○ | × | × | × | ○ |
| (3) Flex resistance | ○ | ○ | ○ | ○ | ○ | × | Δ | ○ | unmeasurable | unmeasurable | unmeasurable | Δ |
| (4-i) Storage modulus, @25°C [GPa] | 3.4 | 5.4 | 4.4 | 5.3 | 5.1 | 4.7 | 3.6 | 1.2 | unmeasurable | unmeasurable | unmeasurable | 3.9 |
| (4-ii) Tanδ (max) [°C] | 172 | 176 | 175 | 180 | 174 | 180 | 180 | 172 | unmeasurable | unmeasurable | unmeasurable | 176 |
| (5) Durometer hardness (Type D) | 80 | 90 | 85 | 86 | 85 | 88 | 82 | 60 | unmeasurable | unmeasurable | unmeasurable | 83 |

As seen from Table 2, the sheets obtained in Examples 4 to 8 were excellent in moldability, flex resistance, storage elastic modulus, and Durometer hardness.

In contrast, the sheet of the resin composition of Comparative Example 1 which does not contain a siloxane-based maleimide had a high crosslinking density and the test piece lacked flex resistance. The resin composition of Comparative Example 2 had a siloxane structure of disiloxane, which did not contribute to the desired improvement in flex resistance. Its flex resistance remained on the same level as Comparative Example 1. The resin composition of Comparative Example 3 exhibited flex resistance inherent to a linear dimethylpolysiloxane structure, but suffered a lowering of hardness. The test piece of the resin composition of Comparative Example 7, corresponding to Comparative Example 3, which contained an aromatic maleimide was found non-uniform because of the lack of compatibility between the siloxane component and the aromatic component due to volatilization of the organic solvent during molding. As a result, the test piece was aggravated in outer appearance and flex resistance. Since the resin compositions of Comparative Examples 4 to 6 lacked compatibility between the polysiloxane component and the cyanate component, uniform sheets could not be molded, and cured parts were of such quality that they remained tacky.

As seen from Table 2, a cured product using the cyclic organosiloxane containing an imide bond and a polymerizable unsaturated bond meets both the desired hardness and improved flex resistance and can be advantageously used as encapsulants for electronic parts or constituents of prepregs, metal clad laminates, printed circuit boards, and semiconductor packages.

It is noted that the invention is not limited to the aforementioned embodiments. While the embodiments are merely exemplary, any embodiments having substantially the same construction as the technical concept set forth in the following claims and exerting equivalent functions and results are believed to be within the spirit and scope of the invention.

## Claims

1. A cyclic organosiloxane containing an imide bond and a polymerizable unsaturated bond, represented by the general formula (1): 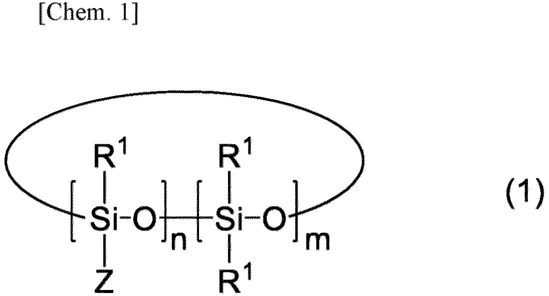 wherein R¹ is each independently hydrogen or a monovalent hydrocarbon group in which at least one atom selected from oxygen, nitrogen, sulfur and phosphorus may intervene, Z is each independently a monovalent organic group having an imide bond and a polymerizable unsaturated bond in which at least one atom selected from oxygen, nitrogen, sulfur and phosphorus may intervene, n is an integer of 2 to 6, m is an integer of 0 to 4, the sum of n+m is from 4 to 6, and the arrangement of siloxane units in parentheses may be arbitrary.

2. The cyclic organosiloxane containing an imide bond and a polymerizable unsaturated bond of claim 1 wherein Z is a group having the formula (2): 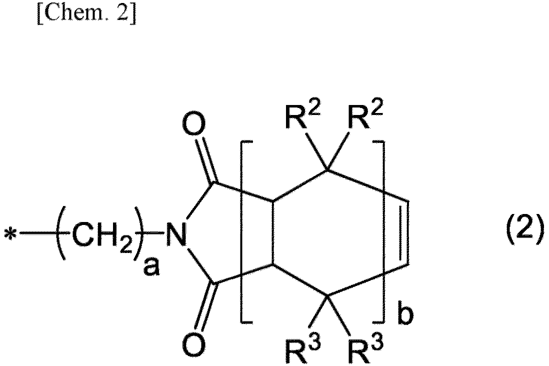 wherein * designates a point of attachment to the silicon atom, R² and R³ are each independently hydrogen or a monovalent hydrocarbon group in which at least one atom selected from oxygen, nitrogen, sulfur and phosphorus may intervene, R² and R³ may bond together to form a ring structure, a is an integer of 3 to 8, and b is an integer of 0 to 2.

3. The cyclic organosiloxane containing an imide bond and a polymerizable unsaturated bond of claim 1 or 2 wherein Z is a group having the formula (3) or (4): 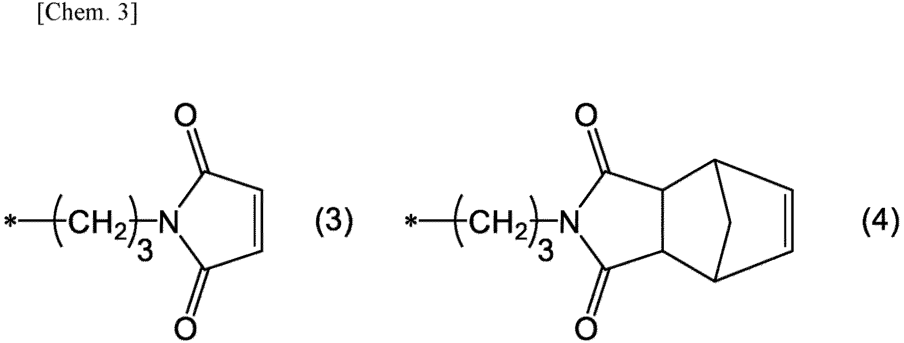 wherein * designates a point of attachment to the silicon atom.

4. The cyclic organosiloxane containing an imide bond and a polymerizable unsaturated bond of claim 1 or 2 wherein R¹ is an alkyl group of 1 to 3 carbon atoms, n is 2, and m is 2.

5. A curable resin composition comprising
(A) a cyclic organosiloxane containing an imide bond and a polymerizable unsaturated bond as set forth in claim 1 or 2, and
(B) a cyanate ester compound.

6. The curable resin composition of claim 5, further comprising (C) a maleimide compound other than component (A).

7. The curable resin composition of claim 5, further comprising (D) a curing catalyst.
